# EUROPÄISCHE PATENTSCHRIFT

(11) **EP 0 324 960 B1**
(45) Veröffentlichungstag und Bekanntmachung des Hinweises auf die Patenterteilung: **14.07.1993**
(21) Anmeldenummer: 88121287.2
(22) Anmeldetag: 20.12.1988
(51) Int. Cl.: B23K 9/09, B23K 9/12

(54) **Verfahren und Vorrichtung zum Kurzschluss-Lichtbogenschweissen**
Process and device for short circuit arc welding
Procédé et dispositif de soudage à l'arc avec courts-circuits

(30) Priorität: 21.12.1987 US 135832
(43) Veröffentlichungstag der Anmeldung: 26.07.1989
(73) Patentinhaber: THE LINCOLN ELECTRIC COMPANY, Cleveland, Ohio 44117 (US)
(72) Erfinder: Parks, John Morris,, Solon, Ohio 44139 (US); Stava, Elliott Keith,, Breksville, Ohio 44121 (US)
(74) Vertreter: Hennicke, Albrecht, Dipl.-Ing.

(56) Entgegenhaltungen:
- US-A- 4 546 234

## Beschreibung

Die Erfindung betrifft ein Verfahren und eine Vorrichtung zum Kurzschluß-Lichtbogenschweißen, bei dem einem mit gesteuerter Geschwindigkeit gegen ein Werkstück kontinuierlich vorgeschobener Schweißdraht von einer Gleichstromquelle Schweißstrom zugeführt wird, der in das auf dem Werkstück sich bildende Schweißbad geleitet wird, wobei von Lichtbogenphasen unterbrochene Kurzschlußphasen aufeinanderfolgen und während der Kurzschlußphasen und der Lichtbogenphasen ein Grundstrom von hoher Induktivität und niedriger Stromstärke durch den Draht und durch das Bad geleitet wird, der gerade oberhalb des Pegels liegt, der notwendig ist, einen Lichtbogen aufrechtzuerhalten, wenn Draht und Bad voneinander getrennt werden und wobei zu Beginn der Lichtbogenphase zunächst ein geringer Grundstrom und anschließend ein starker Stromimpuls mit einem vorher ausgewählten Zeitfunktionsbereich I(t) des Impulsstromes (BP) durch den Lichtbogen in das Schweißbad geleitet werden, welcher Stromimpuls ein bei jeder Lichtbogenphase etwa gleichbleibendes Metallvolumen am Ende des Drahtes im Abstand vom Schweißbad abschmilzt und wobei der niedrige Grundstrom nach Beendigung des starken Stromimpulses für den Rest der Lichtbogenphase aufrechterhalten und der Schweißdraht mit dem an seinem Ende befindlichen, geschmolzenen Metallvolumen in das SchweißbadS geführt wird um die Kurzschlußphase einzuleiten und einen neuen Lichtbogen zu erzeugen, der nur von dem niedrigen Grundstrom aufrechterhalten wird.

Das elektrische Lichtbogenschweißen vom Kurzschlußtyp wird seit vielen Jahren ausgeführt. Diese Schweißart hat jedoch trotz vieler Vorteile auch wesentliche Nachteile. Beispielsweise konnte mit dieser Schweißart nur eine verhältnismäßig geringe Ablagerung erzielt werden. Ferner konnte beim Kurzschluß-Lichtbogenschweißen nur ein verhältnismäßig niedriges Energieniveau verwendet werden und es wurden ungleichmäßige Schweißraupen erzeugt, die ein Nachschweißen erfordern. Ferner benötigt das beim Kurzschluß-Lichtbogenschweißen verwendete Schutzgas oft mindestens einen Teil an teurem inertem Gas, wie beispielsweise Argon, damit eine elektrische Pinch-Wirkung für den Übergang des geschmolzenen Metalles vom bewegten Schweißdraht in das Metallschmelzbad während der Kurzschlußphase beim Kurzschluß-Lichtbogenschweißen erreicht wird.

Da der Schweißdraht beim Kurzschluß-Lichtbogenschweißen dem Schmelzbad zugeführt wird, wechseln beim Schweißen eine Phase, in der sich Draht und Schweißbad durch einen von einem Plasma oder Lichtbogen getrennten Abstand voneinander befinden, die als "Lichtbogenphase" bekannt ist, mit einer Phase einander ab, in der der Schweißdraht das Schweißbad berührt, um geschmolzenes Metall von der Elektrode in das Schweißbad zu überführen. Diese Phase ist als "Kurzschlußphase" bekannt.

In der Vergangenheit waren diese beiden Phasen natürliche Phänomene, die sich durch Verwendung einer Gleichspannungsquelle und durch die Bewegung oder den Vorschub der Schweißelektrode mit einer vorher gewählten Geschwindigkeit in Richtung auf das Schweißbad ergaben. Während der Lichtbogenphase wurde eine Kugel von geschmolzenem Metall am Ende des sich vorwärtsbewegenden Schweißdrahtes geformt. Wenn die Kugel eine genügende Größe erreicht hatte, kam sie in Berührung mit dem Schweißbad und erzeugte dort einen Kurzschluß, der die Kurzschlußphase des Schweißprozesses einleitete. Die Ausgangsleistung der Stromquelle steuerte den Stromfluß während der Lichtbogenphase und während der Kurzschlußphase. Infolgedessen war die Größe der geschmolzenen Metallkugel am Ende der sich vorwärtsbewegenden Elektrode oder des Schweißdrahtes durch mechanische, elektromagnetische und Lichtbogenparameter bestimmt, welche während aufeinanderfolgender Arbeitszyklen variierten. Die Größe der Kugel am Ende des Drahtes war deshalb nicht gleichbleibend und die sich ergebende Schweißnaht am Werkstück nicht gleichförmig. Aus diesem Grunde war die zum Kurzschluß-Lichtbogenschweißen eingesetzte Energie verhältnismäßig gering, so daß nur eine geringe Gesamtmenge an Schmelze und eine geringe Ablagerungsmenge während des gesamten Schweißprozesses erzielt wurde.

Trotz der verschiedenen Nachteile und Schwierigkeiten, die sich beim Kurzschluß-Lichtbogenschweißen ergeben hatten, war die Industrie doch bestrebt, dieses System für die Massenschweißung weiterzuentwickeln. Diese Anstrengungen wurden jedoch in erster Linie durch einen hervorstehenden Wachteil beim Kurzschlußschweißen gehemmt, nämlich ein zwischen den Kurzschlußphasen abwechselnd auftretendes Spritzen, das mit einer hohen Lichtbogenenergie verbunden war. Die Schweißer kannten dieses Spritzproblem besser als Arbeitsbeschränkungen bei dem Verfahren. Das Aussehen der Schweißnaht war unbefriedigend und das Schweißrohr setzte sich mit abgespritztem Metall zu. Es ist nicht überraschend, daß diese offensichtlichen Beschränkungen vorrangig betrachtet wurden, wobei die Bemühungen zum Entwickeln eines verbesserten Verfahrens und einer verbesserten Vorrichtung zum Kurzschluß-Lichtbogenschweißen in den letzten Jahren in erster Linie dahin gingen, das Spritzen zu reduzieren. Die Verringerung des Spritzens mindert den offensichtlichsten Nachteil des elektrischen Kurzschluß-Lichtbogenschweißverfahrens, wie es der Schweißer erfahren hatte; es ließ jedoch keine größeren Schweißablagerungsmengen und keine großen Schweißdrähte zu, um eine gewünschte Schweißnaht von gleichmäßigem Aussehen mit hoher Geschwindigkeit zu erzeugen oder wirklich mehr grundlegende, aber weniger augenfällige Beschränkungen bei früheren Versuchen zum Verbessern des Kurzschluß-Lichtbogenschweißens anzugehen.

Es ist ein Verfahren der eingangs näher erläuterten Art bekannt (US-A-4 546 234), bei dem ein starker Stromstoß unmittelbar nach dem Abreißen der Einschnürung erfolgt, um die Lichtbogenphase des Schweißprozesses einzuleiten. Bei diesem bekannten Verfahren wird während des zumeist instabilen Verfahrensteiles, d.h., bei der Unterbrechung der kurzen und plötzlichen Reionisation des Lichtbogens oder Plasmas, dem Schmelzprozeß ein starker Strom zugeführt. Außerdem verwendet dieses bekannte Verfahren einen hohen Strompegel zum Übertragen des Metalles durch elektrische Pinchwirkung. Hierbei wird unmittelbar nach Bildung des Lichtbogens der Schweißstrom auf eine Spitzenhöhe getrieben und dort gehalten, bis der Schweißtropfen sich an der Spitze des Schweißdrahtes bildet. Die Größe des Spitzenstromes ist hierbei so bemessen, daß ein Kurzschluß nicht auftreten kann. Unmittelbar nach Bildung des Schweißtropfens wird der Strom dann soweit abgesenkt, daß dieser so schnell wie möglich in das Schweißbad übergeht.

Die Erfindung bezweckt eine Verbesserung der bekannten Verfahren zum elektrischen Kurzschluß-Lichtbogenschweißen, mit dem hohe Sedimentations- oder Ablagerungsraten erzielt und dicke Schweißdrähte verwendet werden können und bei dem mit hoher Schweißenergie eine breite Schweißnaht erzeugt werden kann, die ein gleichförmiges, gutes Aussehen hat. Außerdem soll die am Ende des Schweißdrahtes gebildete Kugel aus geschmolzenem Metall während aller aufeinanderfolgender Zyklen des Kurzschluß-Lichtbogenschweißens immer die gleiche Größe haben.

Bei dem Verfahren nach der Erfindung wird dies dadurch erreicht, daß der geringe Grundstrom zu Beginn der Lichtbogenphase während einer vorher ausgewählten Zeit T₂ zugeführt wird, die ausreicht, um das Schweißbad niederzudrücken und daß der starke Stromimpuls beendet wird, bevor 60 % der Lichtbogenphase vorübergegangen ist.

Durch diese Maßnahmen wird erreicht, daß am Ende des Schweißdrahtes immer ein im wesentlichen konstantes Metallvolumen abschmilzt. Da der starke Stromimpuls nicht die gesamte Lichtbogenphase hindurch anhält, hört das Spritzen bald auf und das geschmolzene Metall kann sich am Ende des Schweißdrahtes zu einer Kugel formen, bevor es bei weiterer Annäherung des Schweißdrahtes an das Schweißbad in dieses übergeht. Vorher hat sich auch das Schweißbad beruhigt, so daß es beim Übergang der Metallkugel in das Schweißbad keine Turbulenzen gibt. Dies wird mit Sicherheit dann erreicht, wenn am Ende der Kurzschlußphase eine Ruhepause eingelegt wird, in der das geschmolzene Metall am Draht und das Schweißbad ein Gleichgewicht erreichen.

Der Grundstrom wird zweckmäßig während der gesamten Schweißdauer aufrechterhalten. Man kann auch den starken Stromipuls während einer Zeitdauer fließen lassen, die weniger als 30 % der Lichtbogenphase beträgt.

Die Vorrichtung zum Kurzschluß-Lichtbogenschweißen nach der Erfindung geht von einer bekannten Vorrichtung aus, die eine einzelne Gleichstromquelle konstanter Spannung aufweist, die einen Schweißstrom durch einen Schweißdraht in ein auf einem Werkstück sich bildendes Schweißbad aus geschmolzenem Metall fließen läßt und die eine Drahtvorschubeinrichtung aufweist, die den Schweißdraht derart gesteuert gegen das Werkstück vorschiebt, daß der Schweißdraht abwechselnd in eine Lichtbogenphase und in eine Kurzschlußphase gelangt, wobei der Draht sich während der Lichtbogenphase im Abstand vom Schweißbad befindet, aber gegen das Schweißbad vorgeschoben wird und während der Kurzschlußphase das an seinem Ende befindliche, geschmolzene Metall in das Schweißbad durch Einschnürwirkung übergehen läßt, wodurch eine neue Lichtbogenphase eingeleitet wird.

Bei einer solchen Vorrichtung ist nach der Erfindung ein erster Stromsteuerkreis vorgesehen, der kontinuierlich einen niedrigen, den Lichtbogen stützenden Grundstrom durch den Schweißdraht zum Werkstück fließen läßt. Außerdem ist ein zweiter Stromsteuerkreis zum Steuern des Stromflusses während der Lichtbogenphase vorgesehen, der Mittel aufweist, die einen starken Stromimpuls mit einem vorher ausgewählten I(t)-Bereich durch den Lichtbogen zwischen Draht und Schweißbad schicken.

Besonders zweckmäßig ist es, wenn der zweite Steuerkreis Zeitverzögerungsmittel aufweist, die auf mindestens 5 % der Gesamtzeit einstellbar sind, die für die Kurzschlußphase und die Lichtbogenphase erforderlich ist. Diese Zeitverzögerungsmittel veranlassen den gezündeten Lichtbogen, während einer vorher ausgewählten Zeit T₂ einen niedrigen Bereich einzunehmen, der von dem Grundstrom bestimmt wird. Während dieser Zeit wird das geschmolzene Metall, das sich am Schweißdraht und im Schmelzbad befindet, durch Oberflächenspannung zum Draht bzw. zum Schweißdraht gezogen und vergrößert hierbei den leitenden Querschnitt so, daß der "Plasmaboost" zugeführt werden kann, ohne ein Spritzen hervorzurufen.

Der Plasmazusatzimpuls wird von dem zweiten Stromsteuerkreis erzeugt, wobei ein hoher Stromstoß mit einem vorher ausgewählten I(t)-Bereich oder einer vorher ausgewählten Energie durch den Lichtbogen geführt wird, um ein relativ gleichbleibendes Metallvolumen am Ende des Drahtes und im Abstand vom Schweißbad zu schmelzen. Nach der Erfindung reicht die während dieses Plasmazusatzimpulses erzeugte Energie aus, um eine sphärische Metallkugel zu erzeugen, deren Durchmesser nicht größer ist als der zweifache Durchmesser des Schweißdrahtes. Der Starkstromimpuls ist im ersten Teil der Lichtbogenphase so beschaffen, daß der zweite Teil der Lichtbogenphase sich auf dem niedrigen Niveau des Grundstromes mit hoher Induktanz befindet, wobei der vorgeschobene Schweißdraht zunächst von dem starken Strom oder dem großen Energieimpuls oder der Plasmaverstärkung geschmolzen wird und das Schweißbad sich dann beruhigen kann, bevor die Kugel in das Schweißbad überführt wird.

Durch Zuführen einer hohen Berstenergie oder Verstärkungsenergie nach Verstreichen einer vorherbestimmten Zeit und während des Beginnes der Lichtbogenphase tritt ein Schmelzen nur durch den hohen Energieimpuls und nicht durch den Grundstrom ein. Auf diese Weise wird während jeder Lichtbogenphase zum Schmelzen einer vorherbestimmten Drahtmenge immer die gleiche Energiemenge zugeführt. Das Schmelzen des Drahtendes vollzieht sich während der Plasmaverstärkungsphase. Die geschmolzene Drahtmenge wird von hohen Strahlkräften des Lichtbogens während der Plasmaverstärkung bis zum Ende der Plasmaverstärkung gestützt, wenn der geschmolzene Draht bei niedrigem Grundstrom die Form einer Kugel annehmen kann, welche zur Zeit der Berührung zwischen Schmelzbad und Draht die am meisten effiziente Form darstellt.

In der Vergangenheit stieg der Strom sofort an und wurde während der gesamten Lichtbogenphase auf einer relativ hohen Höhe gehalten, so daß ein kontinuierliches Schmelzen stattfand. Das Schmelzen geht nicht rasch vor sich und darf nicht vor Beginn der Kurzschlußphase zuende sein. Bei einigen älteren Verfahren setzt sich jedoch das Schmelzen in der Tat während der Kurzschlußphase fort. Verwendet man die vorliegende Erfindung, so wird das Metall geschmolzen und die Kugel gebildet, bevor sie in das Metallschmelzbad bei einem niedrigen Grundstrompegel abgesenkt wird. Der Grundstrom kann sich auf einer niedrigen Höhe von etwa 20 A befinden. Vorzugsweise hat er eine Größe von etwa 20 - 80 A und ist vorzugsweise so ausgebildet, daß er gerade über dem Niveau liegt, das zum Aufrechterhalten des Lichtbogens notwendig ist.

Bei Verwendung einer hohen Induktivität im Grundstromkreis kann die Stromstärke weiter reduziert werden und den Lichtbogen noch während des letzten Teiles der Lichtbogenphase und beim Abreißen aufrechterhalten, das durch die Einschnürwirkung hervorgerufen wird und die Kurzschlußphase beendet.

Bei Anwendung dieses neuen Konzeptes wird die Dynamik des Schmelzschwelßbades überwacht, während ältere Systeme in erster Linie darauf gerichtet waren, das Spritzen zu steuern. Durch die Steuerung der Dynamik des Schmelzschweißbades werden die oben erwähnten Nachteile überwunden.

Nach einem weiteren Merkmal der Erfindung ist ein Metallübergangsstromsteuerkreis zum Steuern des Stromflusses während der Kurzschlußphase des Kurzschluß-Lichtbogenschweißprozesses vorgesehen, der ein Zeitglied aufweist, mit dem der auf einem niedrigen Niveau gehaltene Grundstrom aufrechterhalten wird, bis das geschmolzene Metall des Schweißdrahtes in das Metallschmelzbad des Werkstückes durch Oberflächenspannung überzugehen beginnt. Ferner ist dieser Steuerkreis mit einer Vorrichtung versehen,mit der anschließend ein Starkstrompinch-Impuls über das durch Kurzschluß geschmolzene Metall geleitet wird. Eine Detektoreinrichtung unterbricht den Pinchimpuls unmittelbar vor dem Abtropfen des geschmolzenen Metalls vom Draht und startet die Lichtbogenphase des Schweißprozesses.

Durch Anwendung der Erfindung bei einem Kurzschluß-Lichtbogenschweißverfahren wird auch das Spritzen gesteuert, während die geschmolzene Kugel ein vorher festgelegtes und gleichbleibendes Volumen hat, bevor sie in das Metallschmelzbad gelangt. Die Dynamik des Metallschmelzbades ist so beschaffen, daß eine gleichförmige, breite Schweißnaht erhältlich ist.

Der Grundgedanke der vorliegenden Erfindung besteht im wesentlichen darin, eine Plasmaverstärkung (plasma boost) oder einen Plasmaimpuls von bekannter Energie zum Vervollständigen des Schmelzvorganges zu verwenden, der dem Einführen der geschmolzenen Metallkugel in das Schmelzbad vorausgeht, so daß das Einleiten und Überführen von geschmolzenem Metall vom Schweißdraht in das Metallschmelzbad während einer Ruheperiode des Metallschmelzbades erfolgt.

Die Erfindung verwendet einen Grundstrom mit einem Stromsteuerkreis von hoher Impedanz am Ausgang der Gleichstromquelle. Hierdurch sind Gleichstromsteuerelemente, die bei der Schweißvorrichtung nach dem US-A-4 546 234 genau abgestimmt werden müssen, nicht erforderlich.

Nach der Erfindung werden die gewünschte Schweißbaddynamik und Spritzkontrolle ohne solche genauen und sich gegenseitig gefährdenden Parameter erreicht. Die Vorschubgeschwindigkeit kann so eingestellt werden, daß ein Anbacken verhindert wird, oder der Starkstromschmelzimpuls kann in seiner Energie so eingestellt werden, daß eine gewünschte Ablagerungsmenge bei einer bekannten Vorschubgeschwindigkeit erreicht wird.

Nach einem weiteren Merkmal der Erfindung kann ein erster Stromsteuerkreis hoher Induktivität vorgesehen sein, um kontinuierlich einen den Lichtbogen aufrechterhaltenden Grundstrom von geringerer Stärke in der Größenordnung von etwa 20 - 80 A sowohl während der Kurzschlußphase als auch während der Lichtbogenphase vom Schweißdraht auf das Werkstück zu leiten. Ferner ist zweckmäßig ein zweiter Steuerkreis niedriger Induktanz zum Steuern eines Stromflusses oberhalb des Grundstrompegels während der Lichtbogenphase und ein dritter Stromsteuerkreis niedriger Induktanz zum Steuern eines Stromes oberhalb des Grundstrompegels während der Kurzschlußphase vorgesehen. Diese separaten Steuerkreise für eine einzige Stromquelle ermöglichen es, sowohl das Spritzen als auch die Schweißbaddynamik ohne separate Stromquelle zu steuern.

Man erkennt, daß mit der vorliegenden Erfindung ein Verfahren und eine Vorrichtung zum Kurzschluß-Lichtbogenschweißen angegeben wird, mit denen die Turbulenz des geschmolzenen Metalls im Schweißbad verringert werden kann, der Übergang von der Lichtbogen- oder Plasmaphase in die Kurzschlußphase sich bei niedriger Energie vollzieht und ein gleichförmiger Arbeitsablauf erreicht wird.

Mit der Erfindung ist es möglich, sicherzustellen, daß die Kugel aus geschmolzenem Metall am Ende des vorgeschobenen Drahtes während der Lichtbogenphase im wesentlichen immer gleich groß ist und von einer vorher ausgewählten Energiezufuhr gebildet wird, so daß eine gleichförmige, gut aussehende Schweißnaht hergestellt werden kann.

Die Erfindung ermöglicht ferner eine große Ablagerungsmenge, da sie die Verwendung eines dickeren Schweißdrahtes und einer kontrollierten höheren Energiezufuhr erlaubt. Hierdurch kann eine Schweißnaht gebildet werden, die wesentlich größer ist als der Durchmesser des Schweißdrahtes, ohne hierbei eine große Turbulenz in dem Metallschmelzbad hervorzurufen, in das das Schweißmetall übertragen wird.

Ein weiterer Vorteil der Erfindung besteht darin, daß das von der Elektrode oder dem Schweißdraht abschmelzende Metall vorzugsweise durch Oberflächenspannung in das Metallschmelzbad gezogen wird.

Das Verfahren und die Vorrichtung nach der Erfindung können mit verschiedenen Schutzgasen, einschließlich Kohlendioxid, verwendet werden.

Weitere Merkmale und Vorteile der Erfindung ergeben sich aus der nachfolgenden Beschreibung und den Zeichnungen, in denen bevorzugte Ausführungsformen der Erfindung näher beschrieben werden. Es zeigt:
- Fig. 1: ein schematisches Schaltbild des Stromsteuerkreises, der in Übereinstimmung mit der bevorzugten Ausführungsform der Erfindung mit einer einzigen Stromquelle verwendet wird,
- Fig. 2: ein oberes und ein unteres Schaubild, die schematisch einerseits die von einer Stromquelle mit konstantem Potential herkommende Lichtbogen- oder Plasmaspannung und andererseits den Schweißstrom darstellen, der nach der bevorzugten Ausführungsform der Erfindung gesteuert wird,
- Fig. 3: ein kombiniertes Lichtbogenspannungs- und Schweißstromdiagramm, ähnlich den Diagrammen nach Fig. 2, aber entnommen einem besonderen Beispiel der vorliegenden Erfindung, deren Parameter im unteren Teil der Fig. 3 angegeben sind,
- Fig. 4A und 4B: Teildarstellungen des Schweißdrahtendes, welches nach der Erfindung geschmolzen wird, bevor es in ein Metallschmelzbad gelangt, und in denen die Abmessungen angegeben sind, um eine bestimmte Form von Energie zu erklären, die nach der vorliegenden Erfindung zugeführt wird,
- Fig. 4C: eine Verteilungskurve, welche die Verteilung der Akzeptabilität für Kugelgrößen in Übereinstimmung mit den in den Fig. 4A und 4B angegebenen Abmessungen darstellt,
- Fig. 5A bis 5F: schematische Darstellungen des Schweißdrahtes bei seinem Vorschub während verschiedener Schweißphasen, wenn die bevorzugte Ausführungsform der Erfindung angewendet wird,
- Fig. 6: ein Schweißstromdiagramm, das einen Starkstromimpuls zeigt, der während der Kurzschlußphase nach der Erfindung verwendet wird und eine modifizierte Impulsgestaltung hat,
- Fig. 7: eine Abwandlung eines Aspektes der in Fig. 1 dargestellten, bevorzugten Ausführungsform der Erfindung, mit der ein in Fig. 8 dargestellter Impuls mit hoher Energie erzeugt wird, und
- Fig. 8: ein Schweißstromdiagramm, welches die Beziehung der während der Kurzschlußphase und der darauffolgenden Lichtbogenphase erzeugten Stromimpulse nach der Erfindung zusammen mit zwei Abwandlungen der Lichtbogenphasensteuereinheit zeigt, von denen einer die in Fig. 7 dargestellte Abwandlung benutzt.

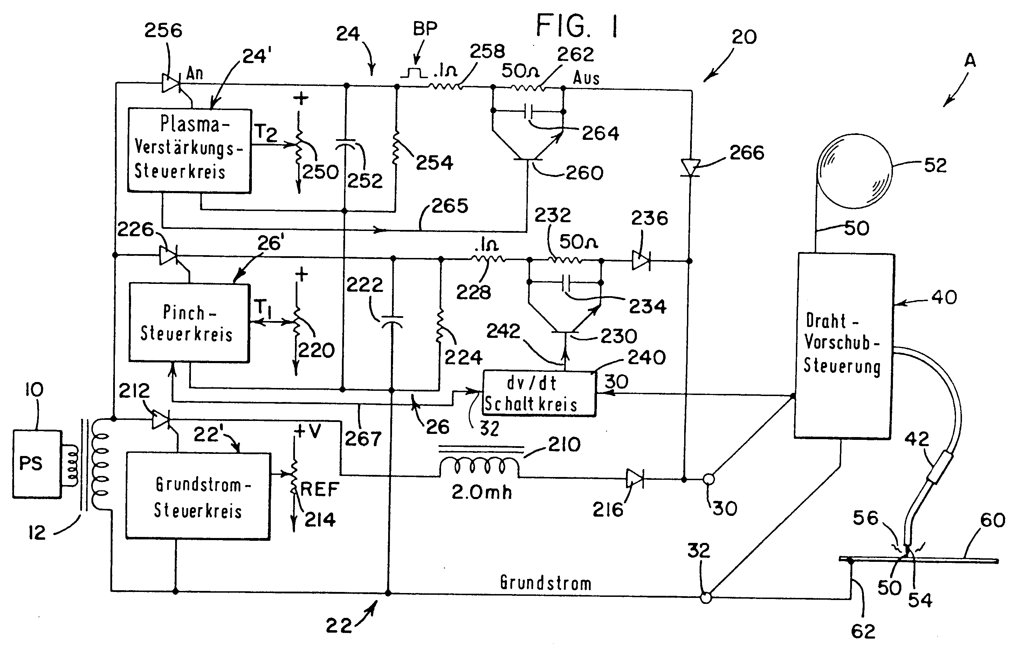

In den Zeichnungen, die eine bevorzugte Ausführungsform der Erfindung nur an einem Beispiel erläutern, aber die Erfindung nicht hierauf beschränken sollen, zeigt Fig. 1 drei getrennte Stromsteuerkreise, die bei einem Kurzschluß-Lichtbogenschweißsystem allgemeiner Art verwendet werden. Die Kurzschluß-Lichtbogenschweißvorrichtung A verfügt über eine Stromquelle 10 mit konstanter Spannung und über einen Speisetransformator 12, der Strom durch mehrere Stromsteuernetze 20 in einem Stromsteuernetz zu Ausgangsklemmen 30 und 32 leitet. Nach der Erfindung weist das Stromsteuernetz 20 einen ersten Grundstromkreis 22 auf, mit dem ein relativ niedriger Grundstrom mit hohem Blindwiderstand kontinuierlich an die Klemmen 30 und 32 angelegt wird. Ein zweiter Stromsteuerkreis 24 leitet einen Zusatzstrom während der Lichtbogenphase des von der Vorrichtung A ausgeführten Kurzschlußschweißprozesses zu den Klemmen 30 und 32. Dieser zweite Stromsteuerkreis erzeugt eine Plasmaverstärkung oder einen Stromimpuls, der eine vorher ausgewählte Energiehöhe hat und in der Nähe des Anfanges der Lichtbogenphase zugeführt wird. Ein dritter Stromsteuerkreis 26 steuert einen Zusatzstrom zu den Klemmen 30 und 32 während der Kurzschlußphase des von der Vorrichtung A durchgeführten Kurzschluß-Lichtbogenschweißprozesses nach der Erfindung.

Wie an sich bekannt, zieht eine Schweißdrahtzuführvorrichtung 40 den Schweißdraht 50 von einer Spule oder einer anderen Drahtzuführeinrichtung 52 mit einer gesteuerten, konstanten Geschwindigkeit ab und führt ihn durch ein Kontaktrohr 42 gegen das Werkstück 60, auf dem das geschmolzene Metall abgelagert werden soll. Aus dem Rohr 42 strömt rund um den Draht ein geeignetes Schutzgas 56 aus, das bei der bevorzugten Ausführungsform Kohlenstoffdioxid ist. Dieses Schutzgas dient zum Schutz des Kurzschluß-Lichtbogenschweißprozesses, wie dies Standardpraxis ist. Das Werkstück 60, wie auch der Draht 50, besteht aus Stahl und ist dadurch geerdet, daß es an die Ausgangsklemme 32 des Stromsteuernetzes 20 angeschlossen ist. Die Drahtvorschubeinrichtung 40 hat natürlich eine Einrichtung zum Steuern der Vorschubgeschwindigkeit des Drahtes 50 durch das Rohr 42 und einen hierfür geeigneten Schaltkreis, der zum Stand der Technik gehört und nicht Teil der vorliegenden Erfindung ist.

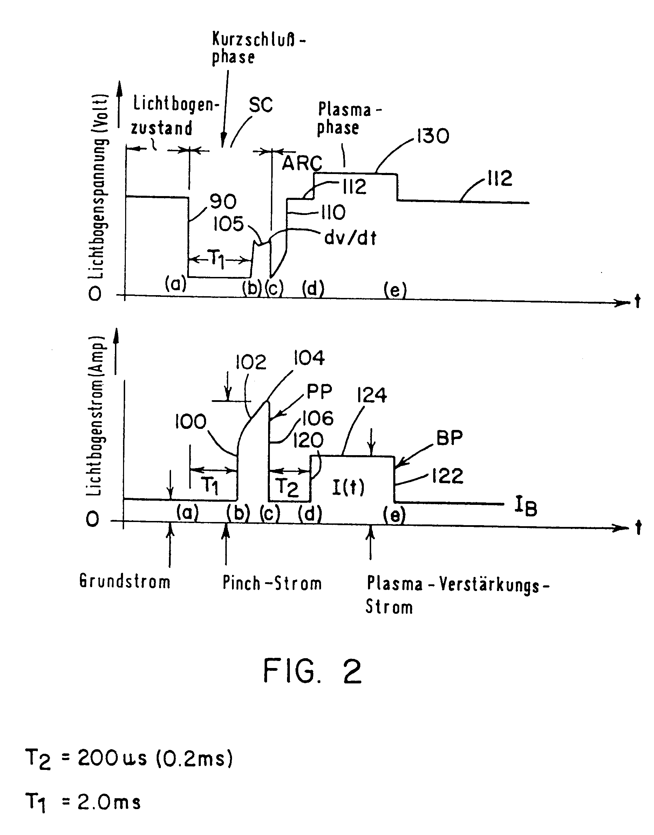

Wendet man sich jetzt der Fig. 2 zu, so erkennt man, daß die Steuerkreise 22, 24 und 26 des Steuernetzes 20 so betätigt werden, daß sie den Schweißstrom so steuern, wie es in dem unteren Diagramm dargestellt ist. Das obere Diagramm zeigt die theoretische, an den Klemmen 30 und 32 anliegende Spannung, wenn die Steuerkreise des Netzes 20 den Kurzschluß-Lichtbogenschweißprozeß steuern, um die theoretischen Stromwerte zu erreichen, die schematisch in dem unteren Diagramm dargestellt sind.

Das Kurzschluß-Lichtbogenschweißen erfordert ein kontinuierliches Zuführen des Schweißdrahtes 50 durch die Verlängerung 54 unter dem Schutzgas 56 in das Metallschmelzbad auf dem Werkstück 60 in einem Prozeß, bei dem eine Kurzschlußphase, bei welcher der Draht sich in elektrischem Kontakt mit dem Metallschmelzbad befindet, mit einer Lichtbogenphase abwechselt, in der sich der Schweißdraht im Abstand von dem Metallschmelzbad befindet und mit diesem durch eine Plasma- oder Lichtbogenbrücke verbunden ist.

Die Lichtbogenphase PC und die Kurzschlußphase SC dieses Prozesses sind in Fig. 2 dargestellt. Sobald der Schweißdraht das Metallschmelzbad des Werkstückes 60 berührt, fällt die Lichtbogenspannung in Position (a) längs der vertikalen Linie 90 rasch ab, um die Kurzschlußphase SC einzuleiten, die von dem Steuerkreis 26 des in Fig. 1 dargestellten Netzes 20 gesteuert wird. In der Zeit T₁ zwischen Position (a) und Position (b) wird geschmolzenes Metall von dem Ende des Drahtes 50 durch die Wirkung der Oberflächenspannung und beim Abwärtsschweißen auch durch die Wirkung der Schwerkraft in das Metallschmelzbad auf dem Werkstück 60 überführt. In der Position (b) ist das Metall im wesentlichen in das Metallschmelzbad hineingelangt und eine Einschnürung hat begonnen. In diesem Augenblick wird ein Pinch-Impuls PP durch den Steuerkreis 26 erzeugt und zusätzlich zu dem konstant durch den Steuerkreis 22 zugeführten Grundstrom über die Klemmen 30 und 32 zugeführt. Dieser Pinch-Impuls ist frei, die Größe des Kurzschlußstromes anzunehmen, der längs der vertikalen Linie 100 und über die Linie 102 ansteigt, die durch eine Widerstandsänderung der Einschnürung zu einer Position 104 strebt, in der der Spannungspegel 105 ein unmittelbar bevorstehendes Schmelzen der Einschnürung anzeigt. Die Spannungsänderung kann durch eine Änderung in dem Signal von dv/dt abgetastet werden, um das durch die abrupte Pinchwirkung des Impulses PP hervorgerufene, unmittelbar bevorstehende Schmelzen anzuzeigen. Die Spannung schreitet bis zu der Höhe 105 fort, bis von einem dv/dt-Detektor eine Änderung des Signales erzeugt wird, die das unmittelbar bevorstehende Schmelzen anzeigt und die sofort den an den Klemmen 30 und 32 vom Steuerkreis 26 herkommenden Strom unterbricht. Die Folge hiervon ist, daß der Pinch-Impuls PP längs der Linie 106 vor dem Abreißen des Schmelzens abrupt beendet wird, das durch die elektrische Pinchwirkung auf das geschmolzene Metall erzeugt wird, das eine Kurzschlußbrücke zwischen dem Schweißdraht 50 und dem Werkstück 60 am Ende der Kurzschlußphase SC bildet. Der abrupte Stromabfall längs der Linie 106 unmittelbar vor der Pinchwirkung unterbricht den Kurzschluß und verhindert ein Spritzen, das durch das Vorhandensein einer hohen Energie zur Zeit der Schmelzenexplosion hervorgerufen wird. Diese Verringerung des Stromes in Position (c) leitet die Lichtbogenphase oder Plasmaphase PC ein, die der Kurzschlußphase SC unmittelbar folgt, wie dies in Fig. 2 dargestellt ist.

Die Lichtbogenphase wird lediglich mit dem Grundstrom I_{B} von hoher Induktivität eingeleitet, der zwischen dem Schweißdraht und dem Werkstück fließt. Infolgedessen herrscht in dem Lichtbogen anfänglich ein sehr geringer Stromfluß und es gibt im wesentlichen nur eine kleine Bogenfläche, so daß der Puddle-Effekt im Metallschmelzbad kleiner ist. Infolgedessen wird das geschmolzene Metall deutlich niedergedrückt, wobei der Strom zu Beginn der Lichtbogenphase nur eine geringe Stärke hat. Die hohe Induktivität des Stromkreises 22 stellt die Bogenkontinuität und die Ionisation des Spaltes zwischen dem sich bewegenden Schweißdraht und dem feststehenden Werkstück sicher, sobald eine Schmelze explodiert. Da die beiden Abschnitte des geschmolzenen Metalles während des Zeitraumes T₂ zwischen den Position (c) und (d) durch Oberflächenspannung gegen die Spitze des Drahtes und gegen das Schmelzbad gezogen werden, steigt die Spannung an den Klemmen 30 und 32 längs der Linie 110 auf einen höheren Wert 112 an, der den stabilen Gleichgewichtszustand darstellt, der von dem kontinuierlich betätigten Grundstromkreis 22 und der Stromquelle 10 geschaffen wird.

Zwischen den Positionen (c) und (d) beruhigt sich das geschmolzene Metall des Schweißbades. Die Zeitdauer T₂ beträgt mindestens etwa 5 % des gesamten Verfahrenszyklus einschließlich der Lichtbogenphase und der Kurzschlußphase. In der Praxis ist diese Zeitdauer annähernd 0,20 ms, die ausreicht, um das Metall am Draht und im Schweißbad zu stabilisieren.

Nach dem Ablauf der Stabilisierzeit T₂ leitet der Plasmaverstärkungskreis 24 einen Starkstromverstärkungsimpuls BP über die Klemmen 30 und 32 in den Schweißvorgang. Da dieser Kreis eine niedrige Induktivität hat, hat der Impuls eine abrupt ansteigende Vorderflanke 120 und eine abrupt abfallende Hinterflanke 122 mit einer Impulshöhe 124, um eine Metallschmelzenergie in den Schweißprozeß einzuführen, die von dem Bereich I(t) des Starkstromverstärkungsimpulses BP gesteuert wird. Diese Energie wird rasch zugeführt und ist so groß, daß eine vorherbestimmte Größe der Kugel erreicht wird, deren Durchmesser nicht größer ist als etwa das Doppelte des Durchmessers des Schweißdrahtes. Die Spannung an den Klemmen 30 und 32 wächst natürlich während des Plasmaverstärkungsimpulses BP in Übereinstimmung mit den Standardcharakteristika einer Stromquelle mit konstantem Potential auf einen Wert 130.

Unmittelbar nachdem der Verstärkungsimpuls an die Klemmen 30 und 32 angelegt wurde, wird der Schweißstrom auf die Grundstromhöhe I_{B} zurückgeführt. Die Folge hiervon ist, daß der Draht 50 nicht weiter schmilzt, da das I²R, das für das Schmelzen des Metalldrahtes erforderlich ist, durch einen Lichtbogen nicht mehr erhältlich ist, der nur den Grundstrom führt, welcher nur dazu ausreicht, den Lichtbogen aufrechtzuerhalten und die Metallkugel in ihrem geschmolzenen Zustand zu halten.

In Übereinstimmung mit der Erfindung erzeugt der Impuls BP nach der Zeit T₂ den Schmelzeffekt. Hierbei erzeugt das Schmelzen am Ende des Schweißdrahtes durch den Impuls BP ein vorherbestimmtes Volumen von geschmolzenem Metall am Ende des Drahtes und beendet dann das Schmelzen für den Rest der Lichtbogenphase. Nachdem der Impuls BP beendet ist, fließt nur noch der Grundstrom um sicherzustellen, daß die Oberflächenspannung den geschmolzenen Draht zu einer Kugel formen kann und das Schweißbad niedergedrückt wird. Die geschmolzene Metallkugel wird von der Drahtzuführeinrichtung 40 in das Schmelzbad abgesenkt. Sobald das Ende des Schweißdrahtes geschmolzen ist, stoßen die Blaskräfte des Verstärkungsimpulses BP das geschmolzene Metall vom Schweißbad solange zurück, bis die vorher ausgewählte Metallmenge geschmolzen ist. Dann wird der Strom reduziert und erlaubt dem geschmolzenen Metall, sich zu einer Kugel zu formen. Das Schweißbad wird stabilisiert und bereitet einen glatten Kontakt zwischen der sphärischen Kugel und dem niedergedrückten Schweißbad vor. Zwischen der Position (e) und der sich anschließenden Kurzschlußposition (a) fließt nur ein geringer Strom, so daß zwischen dem Schweißbad und der Kugel weder mechanische noch elektromagnetische Wirkungen auftreten, während die Kugel sich im letzten Teil der Lichtbogenphase PS auf das Metallschmelzbad zu bewegt.

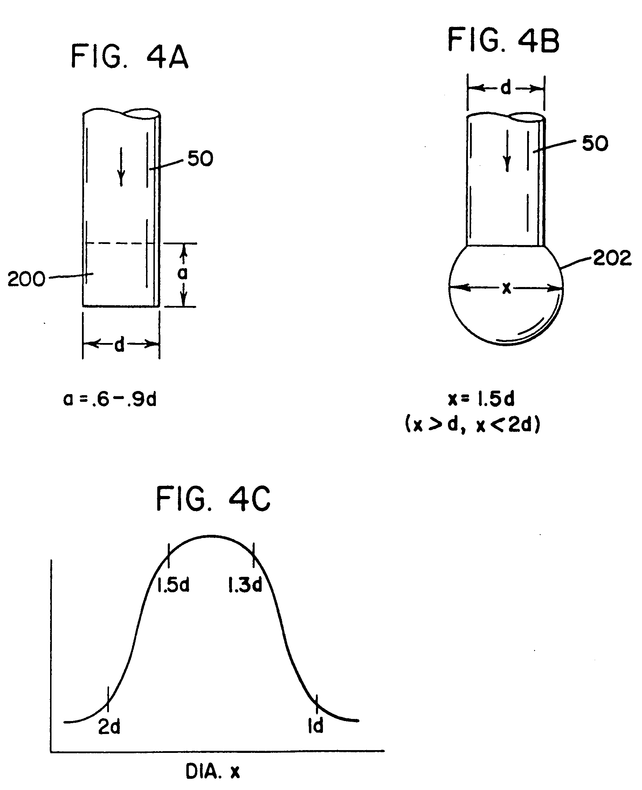

Wendet man sich nun den Fig. 4A, 4B zu, so erkennt man, daß der Hochenergieschmelzimpuls BP eine gesteuerte Energie aufweist, die so ausgewählt ist, daß sie eine vorgegebene Portion 200 am Stab 50 schmilzt, wie das in Fig. 4A dargestellt ist. Die I²R-Erwärmung während des Plasmaverstärkungsabschnittes der Lichtbogenphase schmilzt einen ausgewählten Teil a vom Ende des Drahtes 50 ab, während dieser sich während der Lichtbogenphase in Richtung auf das Metallschmelzbad bewegt. Der starke Strom ist so ausgewählt, daß die I²R-Erwärmung am Ende des Drahtes 50 in Verbindung mit der großen Strahlungswärme, die durch das drastische Ansteigen im Bereich des Lichtbogens hervorgerufen wird, ausreicht, nur einen kleinen Teil 200 vom Ende des Drahtes 50 zu schmelzen. In der Praxis hat das geschmolzene Ende oder der geschmolzene Teil 200 eine Länge, die etwa das 0,6- bis 0,9-fache des Durchmessers d des Drahtes beträgt. Hierdurch wird ein kugelförmiger Körper 202 aus geschmolzenem Metall erzeugt, der im wesentlichen eine sphärische Gestalt hat, nachdem er unter dem Einfluß der Oberflächenspannung nach dem Impuls BP stabilisiert worden ist. Die Kugel hat einen Durchmesser, der im allgemeinen in der Nachbarschaft des 1,5-fachen des Durchmessers des Drahtes 50 liegt. Da die gleiche Energie dem Ende des Drahtes jederzeit zugeführt wird, wird das geschmolzene Ende 200 immer von dem gleichen Stromfluß und der gleichen Lichtbogenstrahlungswärme erhalten, die zusammenwirken, ein ausgewähltes Volumen zu schmelzen und schließlich die gleiche Kugelgröße 202 während einer jeden Plasmaverstärkung der Lichtbogenphase zu formen.

Fig. 4C zeigt, daß der Durchmesser x der Kugel 202 zwischen einer unteren Grenze, die gleich dem Durchmesser d ist, und einer oberen Grenze liegt, die im allgemeinen dem Doppelten des Durchmessers d entspricht. Für jede einzelne Einstellung hat die Kugel die gleiche Größe von einem Zyklus zum anderen, wobei die Verteilungskurve nach Fig. 4C im wesentlichen die Verteilung der Akzeptabilität des Durchmessers x in einem Kurzschluß-Lichtbogenschweißprozeß zeigt.

Sobald der Verstärkungsimpuls BP weggenommen wird, fließt nur noch der Grundstrom durch den Draht 50 und die Bogenfläche wird drastisch reduziert, da die Bogenfläche vom Bogenstrom abhängig ist. Infolgedessen ist die kombinierte I²R-Erwärmung zusammen mit der Bogenerwärmung nicht ausreichend, um mehr Metall von dem Ende des Drahtes 50 abzuschmelzen.

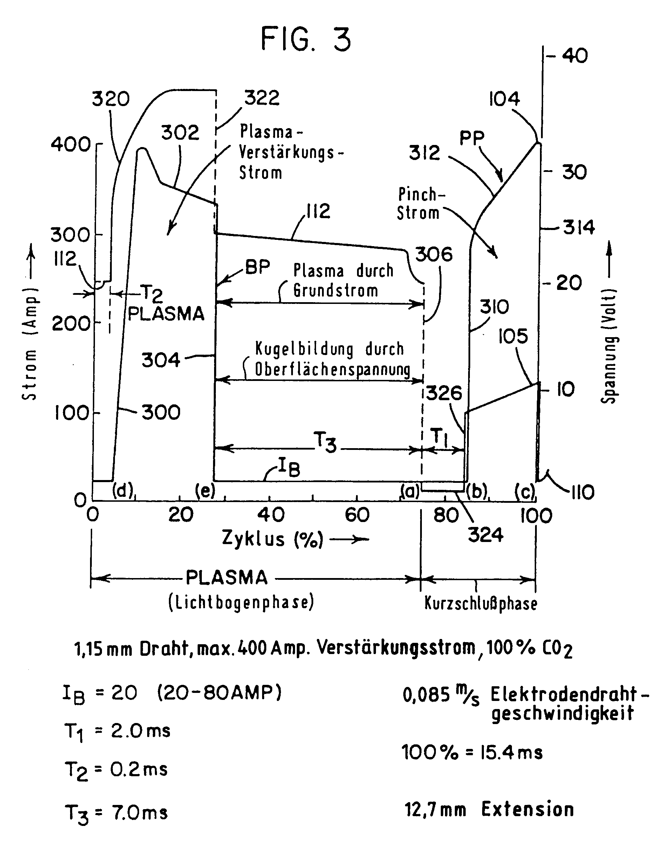

Die Kugel 202 wird nur während des Verstärkungsimpulses gebildet und dann durch Eintauchen des Schweißdrahtes 50 in das Schweißbad gedrückt. Dieses Schmelzen findet am Verstärkungsteil der Lichtbogen- oder Plasmaphase PC statt, so daß die Grundzeit (t) des Impulses BP genügend kurz ist, um dem geschmolzenen Metall am Ende des Drahtes nach dem Impuls BP genügend Zeit zu lassen, sich im Abstand von dem Schmelzbad in eine Kugel zu formen, wobei die Kugelbildung ohne Berührung mit dem Schmelzbad vonstatten geht. Dann kann die geformte Kugel in das Bad abgesenkt werden, um die Plasmaphase PC zu beenden. Diese Zeit beträgt weniger als 50 % der Lichtbogenphasenzeit und wird beendet, bevor 60 % der Lichtbogenphase vorbei sind, so daß der Draht von dem Starkstromimpuls geschmolzen wird und das Schweißbad niedergedrückt oder ruhig werden kann, bevor die geschmolzene Kugel 202 in das Schmelzbad bewegt wird, während sie sich unter dem Einfluß einer relativ kleinen Bogenfläche bewegt, die von dem Grundstrom I_{B} aufrechterhalten wird. Tatsächlich ist die Grundzeitlänge des Verstärkungsimpulses im allgemeinen kleiner als 50 % und beträgt vorzugsweise weniger als etwa 30 % der Lichtbogenphase, was bei Betrachtung einer praktischen Anwendung oder eines in Fig. 3 dargestellten Erfindungsbeispieles deutlicher werden wird.

Die Zeit T₂ beträgt wenigstens 5 % derjenigen Zeit, die für die gesamte Kurzschlußphase und Lichtbogenphase erforderlich ist. In der Praxis beträgt diese Zeitdauer annähernd 0,20 ms. Wie man erkennt, erreicht das geschmolzene Metall am Draht und im Schweißbad zwischen der Position (c) und der Position (d), die als Zeit T₂ definiert ist, ein Gleichgewicht und kommt zur Ruhe. Danach erzeugt ein starker Stromstoß eine große Plasmabogenfläche und ein starker Strom fließt durch den Draht 50 und schmilzt einen ausgewählten Teil am Ende des Drahtes durch die kombinierte Wärmeeinwirkung des fließenden Stromes und der Wärme des Plasmas oder Lichtbogens. Nach diesem Schmelzen erlaubt eine beträchtliche Zeit zwischen der Position (e) und der Position (a) dem geschmolzenen Draht, eine Kugel 202 zu bilden und in das Metallschmelzbad bewegt zu werden, während das Schmelzbad selbst relativ geringen Lichtbogenkräften unterworfen ist. Auf diese Weise hat die Kugel während eines jeden Zyklus die gleiche Größe und der Kurzschluß wird sichergestellt, da es keine von einem starken Bogenstrom erzeugte Turbulenz gibt, welche die Kugel von dem Metallschmelzbad zurückstoßen würde, wenn diese in das Schmelzbad eingeht. Für den schmelzenden Draht 50 ist keine nachfolgende Energie erhältlich; der Draht treibt deshalb schließlich das geschmolzene, zu einer Kugel 202 geformte Metall in das Schmelzbad und erzeugt in der Position (a) eine Kurzschlußphase.

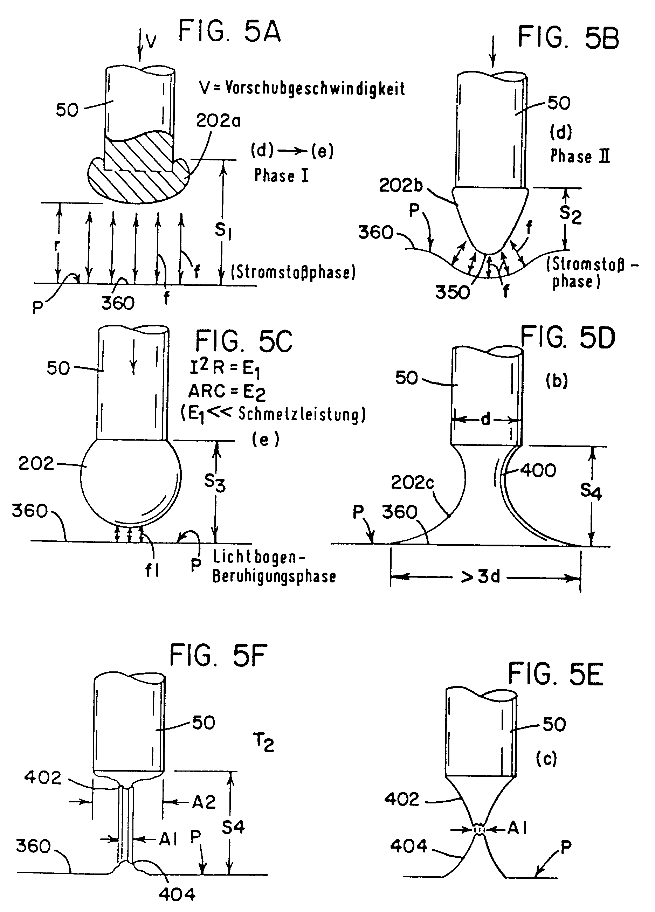

Während der Kurzschlußphase SC geht die Kugel 202 aus geschmolzenem Metall in das Metallschmelzbad ein und wird durch Oberflächenspannung in das Bad übertragen. Dieser Vorgang erzeugt eine letzte Einschnürung des geschmolzenen, zwischen dem Schweißbad und dem Draht 50 sich erstreckenden Metalles und dann ein Abreißen und Trennen der Kugel 202 vom Draht 50, wie dies in Fig. 5E gezeigt ist. Da ein niedriger Grundstrom fließt, hat diese Trennung oder das Abschmelzen nur eine geringe Energie und erzeugt, wenn überhaupt, nur wenig Spritzer. Da die Oberflächenspannung verschiedene Male zum Einschnüren und Abreißen der Kugel 202 vom Draht 50 führen kann, wird nach einem Merkmal der Erfindung zwischen den Positionen (b) und (c) am Ende der Kurzschlußphase durch den Steuerkreis 26 ein Pinch-Impuls PP zugeführt. Diese Pinchwirkung kann unter den Parametern der Energiezufuhr und des Steuerkreises 26 auf natürlichem Wege fortschreiten. Sobald deshalb der Steuerkreis aktiviert wird, steigt der Strom längs der Linie 100 an. Da die Einschnürung infolge der elektrischen Pinchwirkung in ihrem Durchmesser rasch kleiner wird, steigt der Stromfluß danach mehr allmählich an, bis von dem dv/dt-Sensor auf der Spannungshöhe 105 ein unmittelbar bevorstehendes Schmelzen ermittelt wird. Man erkennt, daß die in das Verfahren eingespeiste Energie verhältnismäßig gering ist, da die Spannung nur geringfügig ansteigt und die Zeitdauer des Impulses PP verhältnismäßig kurz ist. Dieser Impuls dient dazu, daß die elektrische Pinchwirkung zu einem vorher festgelegten Zeitpunkt die Kurzschlußphase durch Abschnüren des Metalles der Kugel 202 beendet, nachdem der Übergang unter Oberflächenspannung während der Zeit T₁ im wesentlichen vollständig beendet ist. T₁ beträgt mindestens 10 % der gesamten kombinierten Kurzschluß- und Lichtbogenperiode und geht im allgemeinen über 1,5 ms hinaus. Dies ist verglichen mit einer T₂-Zeit von annähernd 0,2 ms. Die Differenz in der zeitlichen Abstimmung zueinander liegt darin, daß die Zeit T₁ verhältnismäßig lang ist, um einen primären Übergang des geschmolzenen Metalles durch die Wirkung der geringeren Oberflächenspannung und/oder durch die möglicherweise nutzbare Schwerkraft zu ermöglichen. Die Zeit T₂ erlaubt dem geschmolzenen Metall am Draht und dem geschmolzenen Metall im Schweißbad, sich unmittelbar nach einem Schmelzabriß zu beruhigen, wie dies in allgemeiner Form in Fig. 5F dargestellt ist, so daß der Verstärkungsimpuls BP nicht zugeführt wird, wenn sich freies, geschmolzenes Metall im Augenblick einer Schmelzexplosion in einer Stalagtite/Stalagmite-Formation befindet wie dies in Fig 5E dargestellt ist. Dies ermöglicht dem geschmolzenen Metall, einen Querschnitt zu erreichen, der in der Lage ist, den Verstärkungsstrom zu leiten. Das Ende des Drahtes 50 und das Schweißbad, in welches das Metall überführt wird, ziehen sich in einer sehr kurzen, der Schmelzung folgenden Zeitspanne zusammen, wobei die Oberflächenspannungswirkung durch die Verzögerung T₂ ermöglicht wird. Ein Starkstromimpuls, der auftritt, wenn Metall den Spalt überbrückt, ist eine Spritzursache, die im allgemeinen beim Kurzschluß-Lichtbogenschweißen ignoriert wird.

Wendet man sich nun wieder der Fig. 1 zu, so bemerkt man, daß zum Durchführen der oben erläuterten Erfindung verschiedene Stromkreise vorgesehen werden könnten. Bei der dargestellten, bevorzugten Ausführungsform der Erfindung hat das Stromkreisnetz 20 jedoch drei voneinander getrennte und voneinander verschiedene Stromsteuerkreise, von denen jeder eine Stromsteuerfunktion hat, welche den vom Ausgang der Stromversorgung 10 mit konstantem Potential kommenden Strom über die Ausgangsklemmen 30 und 32 dem Schweißprozeß zuführt. Diese Stromkreise sind ihrer Natur nach Zusatzstromkreise und schließen einen konstant betätigten Grundstromsteuerkreis 22 hoher Induktanz ein, der einen außergewöhnlich großen Induktor 210 aufweist, um einen Strom mit hohem Blindwiderstand, aber mit einer geringen Stromstärke wie etwa 20 A oder geringfügig weniger aufrechtzuerhalten. Bei der dargestellten Ausführungsform hat der Induktor 210 eine Induktanz von 2,0 mh. Der Grundstromsteuerkreis wird durch Betätigen eines Leistungstransistors 212 beim Starten irgendeines Schalters wirksam und wird von einem Steuerkreis 22′ gesteuert, wobei die Größe des Stromes von dem Induktor 210 kontrolliert und von einem Potentiometer 214 eingestellt wird. Hierdurch fließt ständig ein Grundstrom IB, der den Lichtbogen während aller Bogenzustände aufrechterhält.

Ein Pinchsteuerkreis 26′ des Pinchkreises 26 wird während der Kurzschlußphase wirksam und enthält einen Widerstand 220, der aus einem Potentiometer besteht, der verstellt werden kann, um die Stromstärke des durch den Transistor 226 zugeführten Stromes zu verändern. Die Zeit T₁ wird durch den Steuerkreis 26′ gesteuert. Ein Kondensator 222 gleicht den Blindwiderstand des Transistors 12 für diesen speziellen Stromkreis aus. Der Widerstand 224 wirkt als Filter für den vom Leistungstransistor 226 kommenden Strom, der einen Stromfluß durch den Widerstand 228 hervorruft. Hierbei wird der Transistor 226 nach der Zeit T₁ betätigt, um den Pinchstrom am Ende der Kurzschlußphase SC einzuschalten. Der Pinchsteuerkreis wird durch eine geeignete Spannungsfühl- oder Detektoreinrichtung betätigt, welche den Augenblick anzeigt, wenn die Schweißspannung von dem Plasmaniveau auf das Kurzschlußniveau umspringt. Dies kann durch einen in der Leitung 267 angeordneten Detektor 240 oder durch andere geeignete Spannungs-Abtastkreise erreicht werden. Nach der Zeit T₁ wird ein Stromschalter oder ein Transistor 226 von dem Steuerkreis 26′ geschlossen, um den Stromkreis 26 zu veranlassen, einen Stromfluß durch den Strombegrenzungswiderstand 228 zu leiten. Ein Darlington-Transistorschalter 230 wird in Abhängigkeit von einem Signal in der Leitung 267 von einer Logik Leitung 242 geschlossen und überbrückt den Widerstand 232 und den hierzu parallelgeschalteten Kondensator 234, damit der Pinch-Impuls PP die Sperrdiode 236 überwinden kann. Der Detektor 240 hat einen dv/dt-Sensor, der den Schalter 230 nach einer Zeit T₁ öffnet, nachdem der Schalter von dem Pinchsteuerkreis 26 geschlossen wurde. Auf diese Weise betätigt der Pinchsteuerkreis 26′ den Schalter 226 nach der Zeit T₁ und der Schalter 230 schaltet den Widerstand 232 in Reihe mit dem Widerstand 228, um den Pinch-Impuls zu beenden. Anschließend wird dieser Stromkreis solange inaktiv, bis der nächste Kurzschluß bei einem plötzlichen Abfallen der Plasmaspannung festgestellt wird.

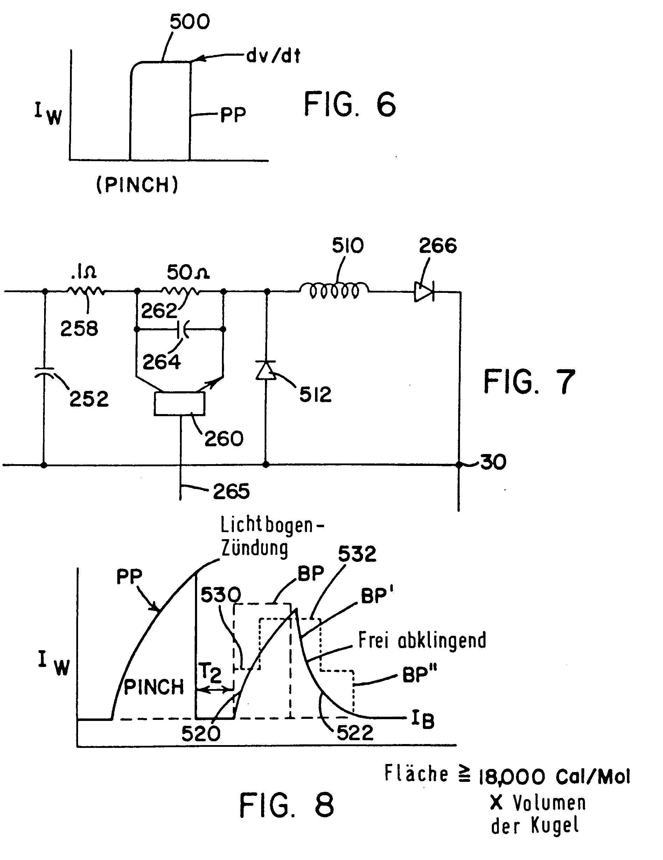

Der Plasmaverstärkungsstromsteuerkreis 24 ist ähnlich aufgebaut wie der Pinchsteuerkreis 26 und weist ein einstellbares Potentiometer 250 zum Steuern der Stromstärke auf.Die Zeit T₂ wird mit der Steuerung 24′ eingestellt. Ein Kondensator 252 gleicht die Induktanz der Stromversorgung aus und ist mit einem Filterwiderstand 254 kombiniert, der den Zweck hat, einen oberhalb des Schaltkreises dargestellten Energieimpuls BP zu erzeugen. Wenn der Stromschalter oder Transistor 256 von dem Plasmaverstärkungssteuerkreis geschlossen wird, wird die Vorderflanke des Impulses gebildet. Dieser Starkstromverstärkungsimpuls BP durchfließt den Widerstand 258. Ein Darlington-Stromschalter 260 ist leitend, um den Impuls BP durchfließen zu lassen. Der Schalter 260 ist einem Widerstand 262 und einem Kondensator 264 parallelgeschaltet, um den Starkstromverstärkungsimpuls auf ein ihm durch die Leitung 265 zugeführtes Signal hin abzubrechen und hierdurch die Hinterflanke des Impulses zu bilden. Eine Sperrdiode 266 leitet den Strom aus dem Kreis 24 zu den Klemmen 30 und 32. Zusammengefaßt wird der Transistorschalter 256 nach der Zeit T₂ eingeschaltet. Hierdurch wird die Vorderflanke des Verstärkungsimpulses BP erzeugt. Gleichzeitig ist der Schalter 260 eingeschaltet und läßt den Verstärkungsimpuls durch die Diode 266 hindurchfließen. Zum Beenden des Verstärkungsimpulses inaktiviert ein Signal in der Leitung 265 den Schalter 260 und bringt hierdurch den Widerstand 260, der einen Widerstand von 50 Ω hat, in den Ausgangskreis. Hierdurch wird der Impuls sofort beendet und die Hinterflanke der Plasmaverstärkung oder des Plasmaverstärkungsimpulses BP gebildet. Hierbei hat der Impuls eine verhältnismäßig rechteckige Gestalt, wie dies im unteren Teil der Fig. 2 und schematisch in gestrichelten Linien in Fig. 8 dargestellt ist.

In Fig. 3 ist ein spezifisches Beispiel eines Kurzschluß-Lichtbogenschweißverfahrens nach der Erfindung dargestellt, welches den Schweißstrom und die hieraus resultierenden Spannungspegel in verschiedenen Stadien darstellt. Nach der Zeit T₂, während der sich die Spannung auf der normalen Höhe 112 eines stabilisierten Plasmas befindet, wird der Impuls BP erzeugt. Dies verstärkt den Strom längs der Linie 300 auf annähernd 400 A, zu welcher Zeit das Ende des Drahtes 50 zu schmelzen beginnt und den Strom veranlaßt, längs der Linie 302 abzufallen, bis der Schalter 260 in Fig. 1 geöffnet wird. Der Energieverstärkungsimpuls BP wird dann abrupt unterbrochen, wie dies von der Hinterflanke 306 des Verstärkungsimpulses angezeigt wird. Dies verringert den Strom bis auf die Grundstromstärke von I_{B}. Zu dieser Zeit wird die Spannung von dem Grundstrom gesteuert, der eine beträchtliche Induktivität aufweist; infolgedessen sinkt die Plasmahöhe 112 längs der durch die Zeit T₃ angedeuteten Linie ab. Diese Zeit ist die übriggebliebene Zeit der Lichtbogenphase nach dem Ende des Schmelzimpulses. Während dieser Zeit wird der vom Stromkreis 22 kommende Grundstrom durch die Stromquelle gesteuert, so daß es eine sehr kleine Lichtbogenfläche gibt und diese Fläche nur ausreicht, um den Lichtbogen so zu stützen, daß sich das Schmelzbad während des letzten Teiles der Lichtbogenphase stabilisieren kann. Sobald die am Ende des Drahtes gebildete Kugel aus geschmolzenem Metall auf das Schmelzbad trifft, fällt die Spannung, hervorgerufen durch den Kurzschlußkreis, längs der Linie 306 ab. Der Strom bleibt auf der Grundstromhöhe und wird eine beträchtliche Zeit von annähernd 1,5 - 2,0 ms auf dieser Höhe gehalten. Danach wird der Transistor 226 des Stromkreises 26 geschlossen, während auch der Schalter 230 geschlossen ist. Sobald der Strom das obere Ende der Linie 310 erreicht, beginnt die Spannung sich allmählich zu ändern, da der Widerstand der abnehmenden Einschnürung während der Pinchwirkung ansteigt. Dies veranlaßt den Strom, sich allmählich in die Position 104 zu schieben, unmittelbar bevor die elektrische Pinchwirkung die Schmelze explodieren läßt. Vor dem Schmelzen stürzt der Strom 314 auf die Höhe des Grundstromes zurück und reduziert die Energie der Schmelzexplosion. Dies wird dadurch erreicht, daß der Schalter 230 von dem in Fig. 1 dargestellten Detektor 240 geöffnet wird. Wenn dies geschieht, wird die Spannung längs der Linie 110 auf der Höhe 112 stabilisiert, die während der Lichtbogenphase für eine Zeit T₂ gehalten wird. Danach wiederholt sich der Stromverstärkungsimpuls. Die Parameter dieses speziellen Beispiels sind im unteren Teil der Fig. 3 angegeben.

In den Fig. 5A bis 5F sind die Betriebsverhältnisse der vorliegenden Erfindung schematisch dargestellt, um zu zeigen, wie mit der Erfindung das Spritzen kontrolliert und eine breite Schweißraupe mit einer vergrößerten Ablagerungsmenge erzeugt werden kann. Wenn die Lichtbogenphase durch Abtrennen einer Schmelze mit dem elektrischen Pinch-Impuls geschaffen wird, fließt für eine kurze Zeit T₂ nur der Grundstrom. Dann wird der Verstärkungsimpuls zugeführt und der Draht 50 geschmolzen und von dem Schmelzbad P zurückgedrückt, wie dies in Fig. 5A dargestellt ist. Dieser Impuls schmilzt leicht das Ende des vorgeschobenen Schweißdrahtes 50 und erzeugt eine im wesentlichen torusförmige, geschmolzene Metallmasse 202a, die um einen Betrag r durch Blaskräfte von dem Schmelzbad P zurückgedrückt wird, wie dies durch einige Pfeile f in Fig. 5A dargestellt ist. Diese Blaskräfte drücken die Masse 202 vom Schmelzbad P fort, so daß die geschmolzene Metallmasse 202a sich um das ungeschmolzene Ende des Drahtes 50 sammelt, das sich in dem Abstand S₁ vom Schmelzbad P befindet. Das energiereiche elektrische Plasma zwischen dem Draht und dem Schmelzbad veranlaßt die Strahlkräfte f, sowohl auf das Bad als auch auf die Masse 202a zu wirken, um die Masse vom Bad fernzuhalten, solange die Plasmaverstärkung zugeführt wird. Wenn Argon verwendet wird, kann sich die Masse zu einer im wesentlichen konischen Masse 202b zusammenschieben, deren eines Ende 350 sich bis zu einer Höhe auf das Bad P hin erstreckt, die unterhalb des natürlichen Schweißbadspiegels 360 liegt, wie dies in Fig. 5B dargestellt ist. Diese Gestalt wird durch die elektrische Pinchwirkung hervorgerufen und bildet sich während des letzten Teiles der Plasmaverstärkung. In dieser Situation wird das Bad P durch die Bogenkräfte nach außen gedrückt, wie dies schematisch in Fig. 5B dargestellt ist. Das ungeschmolzene Ende des Drahtes 50 wandert in Richtung auf das Bad P und befindet sich jetzt in einem kleineren Abstand S₂.

Wenn der Verstärkungsimpuls unterbrochen wird, formt die Oberflächenspannung die Masse 202b in eine sphärische Kugel, wie dies in Fig. 5C dargestellt ist. Wenn CO₂ verwendet wird, gibt es keine wesentliche elektrische Pinchwirkung, so daß, wenn der starke Plasmaverstärkungsstrom aufhört, die geschmolzene Masse aus der in Fig. 5A dargestellten Masse 202a in die Kugel 202 umgeformt wird. Der Abstand S₃ ist so groß, daß das Schweißbad, wenn es sich beruhigt oder im wesentlichen glatt wird, die Kugel 202 aus geschmolzenem Metall nicht berührt, da das Metall des Schweißbades in die konkave Form zurückkehrt, die durch die hohen Strahlkräfte während des Starkstromimpulses erzeugt wird. Die niedrigen Lichtbogenkräfte, die nur von dem Grundstrom verursacht werden, halten das geschmolzene Metall nicht länger vom Bad fern und es beginnt allmählich eine zwangsläufige Kurzschlußwirkung, wenn der Draht 50 derart abgesenkt wird, daß die Kugel 202 das Bad P berührt. Dies geschieht, während nur geringe Blaskräfte vorhanden sind, so daß keine Neigung besteht zurückzuprallen und die Energie im Plasmaspalt nicht ausreicht, um während der Kurzschlußwirkung eine Badturbulenz zu erzeugen.

Die Zeit T₁ zwischen der Plasmaverstärkung oder dem Plasmaimpuls BP und dem Kurzschlußkreis läuft während der Lichtbogenphase ab und ist genügend lang, um die Kugel sich bilden und das Bad sich von der Erregung durch den starken Stromfluß beruhigen zu lassen. Wenn der Kurzschluß eintritt, wird das Metall der Kugel 202 durch Oberflächenspannung in das Schweißbad überführt, wie dies durch die Darstellung der geschmolzenen Masse 202c in Fig. 5D angedeutet ist. Die Masse 202c hat eine Einschnürung 400 mit kleinem Durchmesser, wenn die Oberflächenspannung das geschmolzene Metall vom Ende des Drahtes 50 herunterzieht. Man erkennt, daß bei einem ruhigen Schweißbad P das Metall nach außen fließen kann, um eine Schweißnaht zu erzeugen, die dreimal größer ist als der Durchmesser des Drahtes 50. Infolgedessen kann eine breite Schweißnaht gebildet werden, die eine Vergrößerung der Drahtgröße und der Energie erleichtert, ohne ein Spritzen oder Schweißnahtunregelmäßigkeiten hervorzurufen.

Das geschmolzene Metall 202c geht durch Oberflächenspannung in das Bad über und dann tritt eine elektrische Pinchwirkung auf. Bevor die Pinchwirkung die Einschnürung 400 zerreißt, wird der Schweißstrom auf die Grundstromhöhe reduziert. Dieser niedrige Strom erzeugt einen Lichtbogen mit einem kleinen Durchmesser A1, wenn die Einschnürung reißt, wie dies in Fig. 5E dargestellt ist. Die Einschnürwirkung an der Einschnürung 400 wurde plötzlich unterbrochen; aus diesem Grunde gibt es Metall 402, das sich vom Ende des Drahtes 50 bis zum Bad P erstreckt. In einer ähnlichen Weise schafft der Badteil der Einschnürung geschmolzenes Metall 404. Durch Verwendung eines niedrigen Grundstromes, der zur Zeit der Schmelzenexplosion eine hohe Induktivität hat, ist die Energie zum Wiederzünden des Lichtbogens niedrig, um ein Spritzen zu verhindern. Außerdem wird der Verstärkungsstrom nicht so zugeführt, daß die Metallteile 402 und 404 durch Oberflächenspannung in ihre jeweiligen Ausgangsflächen zurückkehren können, wie dies in fortgeschrittenem Stadium in Fig. 5F dargestellt ist.

Sobald der Verstärkungsimpuls zugeführt wird, werden die in den Fig. 5A bis 5F dargestellten Schritte wiederholt. Man erkennt, daß die Größe der Kugel von der Energie während der Stromverstärkung am Beginn der Lichtbogenphase bestimmt wird. Danach schmilzt nichts mehr und das Schweißbad wird geglättet. Das Metall wird allmählich durch die Wirkung der Oberflächenspannung übergeleitet mit nur geringerer Unterstützung am Ende der Kurzschlußphase, um eine abrupte elektrische Pinchwirkung zum zwangsweisen Abreißen der Einschnürung innerhalb kurzer Zeit zu erreichen.

In Verbindung mit den Fig. 1 bis 5 wurde die bevorzugte Ausführungsform der Erfindung beschrieben. Es sind jedoch gewisse Abwandlungen möglich, ohne den Rahmen der Erfindung zu verlassen. Unter Bezugnahme auf Fig. 6 kann beispielsweise der Pinch-Impuls PP durch geeignete Wahl von Parametern, wie dem Widerstand im Pinchsteuerkreis 26, mit einer im wesentlichen glatten oberen Maximumlinie 500 gebildet werden. Bei dieser Ausführungsform wird am Ende der Kurzschlußphase ein konstanter Strom zugeführt, um die elektrische Schlußpinchwirkung zu erzielen. Dieser Strom wird von einem Vorwarnkreis, beispielsweise einem dv/dt-Detektor 240, auf die Grundstromhöhe abgesenkt.

Wie aus Fig. 7 hervorgeht, kann der Plasmaverstärkungssteuerkreis 24 dadurch abgewandelt werden, daß ein Ausgangsinduktor 510 und eine Freilaufdiode derart eingefügt werden, daß der Verstärkungsimpuls aus dem in Fig. 8 in strichierten Linien dargestellten Profil in das in ausgezogenen Linien dargestellte Profil umgewandelt wird. Eine hohe, zeitkonstante Vorderflanke 520 und eine langsam ausschwingende Hinterflanke 522, die von der Freilaufdiode gesteuert werden, bilden den Impuls BP′ mit der Energie des Impulses BP. Der Induktor 510 könnte durch Verwendung eines zweiten mit einem einstellbaren Topf einstellbar sein, um das Profil der Vorderflanke 520 zu steuern. Bei jedem der beiden Verstärkungsimpulse ist die Gesamtenergie, die durch die Integration des Profiles bestimmt wird, so groß, daß ein ausgewählter Teil des Drahtes 50 während des Impulses geschmolzen wird. Wie vorher erwähnt und in Fig. 5C dargestellt, rührt dieses Schmelzen von zwei Wärmequellen her, nämlich der Energie aus der I²R-Erwärmung und aus der Energie, die von der Lichtbogenstrahlungswärme erzeugt wird. Der Strompegel ist so ausgewählt, daß die I²R-Erwärmung das Ende des Drahtes nicht ohne Unterstützung der hohen Energie schmilzt, welche den elektrischen Verstärkungsimpuls begleitet, so daß ein Schmelzen nur an dem dem Lichtbogen ausgesetzten Ende des Drahtes 50 eintritt. Diese Wärmequellen bewirken zusammen das Schmelzen einer ausgewählten Menge. Sobald der Impuls vorbei ist, hört das Schmelzen im wesentlichen auf. Für die Auswahl der Energie ist die Fläche zwischen den Stromverstärkungsimpulskurven so groß, daß annähernd 18000 cal je Mol mal das Volumen der Kugel 202 die Gesamtenergie darstellen, die für die Schmelzwirkung entwickelt wird. Dieser Energiewert bestimmt im wesentlichen die Metallmenge in der geschmolzenen Metallkugel 202, nachdem der Starkstromschmelzimpuls beendet wurde. Diese Energie ist die gleiche in dem Verstärkungsimpuls BP bei der bevorzugten Ausführungsform nach der Erfindung, wie der Verstärkungsimpuls BP′, der bei der in Fig. 7 dargestellten Abwandlung verwendet wird.

Bei einer weiteren Abwandlung der Erfindung kann der Verstärkungsimpuls das in Fig. 8 in strichierten Linien und als Impuls BP˝ dargestellte Profil annehmen. Dieser Impuls wird von einem Impuls mit im wesentlichen flachen Profil erzeugt, der ein Niveau 530 hat, in Verbindung mit einem zweiten Impuls, der einen oberen Strompegel 532 aufweist und eine im wesentlichen reduzierte Grundzeitlänge aufweist. Durch Kombination dieser beiden Subimpulse in einen Verstärkungsimpuls BP˝ wird das Schmelzen durch den Heizeffekt des Stromes 530 eingeleitet. Die Erwärmung wird dann durch den Hochpegelstrom 532 beschleunigt. Etwas Schmelzen kann eintreten, wenn der Strom auf den erhöhten Pegel 530 angehoben wird. Danach ist das Schmelzen beendet und der Schweißstrom fällt für den Rest der Lichtbogenphase auf die Grundstromhöhe zurück, um die Kugel 202 in das Metallschmelzbad P zu führen , wie dies in Fig. 5D dargestellt ist.

Bei Verwendung der vorliegenden Erfindung ist der Übergang des geschmolzenen Metalles nicht von der elektrischen Pinchwirkung abhängig. Aus diesem Grunde können 100 % Kohlenstoffdioxid als Schutzgas verwendet werden. Durch Einsatz der Verzögerung T₁ besteht solange keine Neigung, den starken Strom einzuführen, bis ein substantieller Kontakt zwischen der Kugel 202 und dem Schweißbad P hergestellt ist. Tatsächlich verlagert sich dieser Kontakt durch Oberflächenspannung an die Stelle, wo die Einschnürung 400 begonnen hat.

Bei Verwendung der vorliegenden Erfindung kann eine Schweißnaht erzielt werden, deren Breite dem Dreifachen der Größe des Drahtes 50 entspricht. Wenn der Verstärkungsstrom oder -impuls erzeugt wird, haben die Strahlkräfte f die Neigung, das Metall 202a vom Bad P zurückzudrücken, welches eine Tendenz hat, die geschmolzene Metallmasse während des Schmelzens vom Bad fernzuhalten, so daß sichergestellt wird, daß die Metallberührung, welche einen Kurzschluß hervorruft, solange nicht eintritt, bis der Verstärkungsstrom beseitigt wurde und die Kugel 202 geformt wurde. Die Bogenlänge muß größer als die Hälfte des Durchmessers der Elektrode sein, wenn die Verstärkung zugeführt wird, um das Metall in Entfernung vom Schweißbad zu schmelzen, während zur gleichen Zeit das Schmelzbad von dem Bereich unmittelbar unterhalb des Schweißdrahtes fortgedrückt wird. Andernfalls kann ein elektrisches Anbacken eintreten.

Der Verstärkungsimpuls hält eine vorherbestimmte Zeit an, die eine vorherbestimmte Metallmenge schmelzen läßt. Wenn auf diese Weise die Verstärkung fortgenommen wird und das geschmolzene Metall aufgrund der Oberflächenspannung eine Kugel 202 bildet, bleibt die Kugel 202 solange oberhalb des Schweißbades, bis sie in das Schweißbad um das von der Drahtzuführeinrichtung 40 gesteuerte Drahtvorschubmaß abgesenkt wird.

Die Plasmaverstärkungsenergie reicht lediglich aus, um ein Drahtvolumen zu schmelzen, welches dem in Fig. 4B gezeigten Volumen äquivalent ist. Falls durch die Energie des Verstärkungsimpulses eine darüber hinausgehende Drahtmenge geschmolzen wird, ist der Übergang der Kugel ohne Spritzen schwieriger. Aus diesem Grunde wird die Energie des Verstärkungsimpulses so gesteuert, daß die in Fig. 4B angegebenen Parameter eingehalten werden.

## Patentansprüche

1. Verfahren zum Kurzschluß-Lichtbogenschweißen, bei dem einem mit gesteuerter Geschwindigkeit gegen ein Werkstück (60) kontinuierlich vorgeschobenen Schweißdraht (50) von einer Gleichstromquelle (20) Schweißstrom zugeführt wird, der in das auf dem Werkstück sich bildende Schweißbad geleitet wird, wobei von Lichtbogenphasen (PC) unterbrochene Kurzschlußphasen (SC) aufeinanderfolgen und während der Kurzschlußphasen (SC) und der Lichtbogenphasen (PC) ein Grundstrom (I_{B}) von hoher Induktivität und niedriger Stromstärke durch den Draht und durch das Bad geleitet wird, der gerade oberhalb des Pegels liegt, der notwendig ist, einen Lichtbogen aufrechtzuerhalten, wenn Draht und Bad voneinander getrennt werden und wobei zu Beginn der Lichtbogenphase (PC) zunächst ein geringer Grundstrom (I_{B}) und anschließend ein starker Stromimpuls (BP) mit einem vorher ausgewählten Zeitfunktionsbereich (I(t)) des Impulsstromes (BP) durch den Lichtbogen in das Schweißbad geleitet werden, welcher Stromimpuls (BP) ein bei jeder Lichtbogenphase (PC) etwa gleichbleibendes Metallvolumen (202) am Ende des Drahtes im Abstand vom Schweißbad abschmilzt und wobei der niedrige Grundstrom (I_{B}) nach Beendigung (e) des starken Stromimpulses für den Rest der Lichtbogenphase (PC) aufrechterhalten und der Schweißdraht (50) mit dem an seinem Ende befindlichen geschmolzenen Metallvolumen (202) in das Schweißbad geführt wird, um die Kurzschlußphase (SC) einzuleiten und einen neuen Lichtbogen zu erzeugen, der nur von dem niedrigen Grundstrom (I_{B}) aufrechterhalten wird, **dadurch gekennzeichnet,** daß der geringe Grundstrom (I_{B}) zu Beginn der Lichtbogenphase (PC) während einer vorher ausgewählten Zeit (T₂) zugeführt wird, die ausreicht, um das Schweißbad niederzudrücken und daß der starke Stromimpuls (BP) beendet wird, bevor 60 % der Lichtbogenphase vorübergegangen ist.

2. Verfahren nach Anspruch 1, **dadurch gekennzeichnet,** daß der Grundstrom (I_{B}), der während der vorher ausgewählten Zeit (T₂) zugeführt wird, am Ende der Kurzschlußphase (SC) eingeleitet wird, als eine Ruhepause, in der das geschmolzene Metall am Draht und das Schweißbad ein Gleichgewicht erreichen.

3. Verfahren nach Anspruch 1 oder 2, **dadurch gekennzeichnet,** daß der Grundstrom (I_{B}) während der gesamten Schweißdauer aufrechterhalten wird.

4. Verfahren nach einem der Ansprüche 1 bis 3, **dadurch gekennzeichnet,** daß man den starken Stromimpuls (BP) während einer Zeitdauer fließen läßt, die weniger als 30 % der Lichtbogenphase beträgt.

5. Vorrichtung zum Kurzschluß-Lichtbogenschweißen nach Anspruch 1 mit einer einzelnen Gleichstromquelle konstanter Spannung, die einen Schweißstrom durch einen Schweißdraht in ein auf einem Werkstück (60) sich bildendes Schweißbad aus geschmolzenem Metall fließen läßt, mit einer Drahtvorschubeinrichtung (40), die den Schweißdraht (50) derart gesteuert gegen das Werkstück (60) vorschiebt, daß der Schweißdraht abwechselnd in eine Lichtbogenphase und in eine Kurzschlußphase gelangt, wobei der Draht (50) sich während der Lichtbogenphase im Abstand vom Schweißbad befindet, aber gegen das Schweißbad vorgeschoben wird und während der Kurzschlußphase das an seinem Ende befindliche, geschmolzene Metall in das Schweißbad durch Einschnürwirkung übergehen läßt, wodurch eine neue Lichtbogenphase eingeleitet wird, **dadurch gekennzeichnet,** daß ein erster Stromsteuerkreis (22) vorgesehen ist, der kontinuierlich einen niedrigen, den Lichtbogen stützenden Grundstrom (I_{B}) durch den Schweißdraht (50) zum Werkstück (60) fließen läßt und daß ein zweiter Stromsteuerkreis (24) zum Steuern des Stromflusses während der Lichtbogenphase (PC) vorgesehen ist, der Mittel aufweist, die einem starken Stromimpuls (BP) mit einem vorher ausgewählten Zeitfunktionsbereich (I(t)) durch den Lichtbogen zwischen Draht und Schweißbad schicken.

6. Vorrichtung nach Anspruch 5, **dadurch gekennzeichnet,** daß der zweite Steuerkreis (24) Zeitverzögerungsmittel aufweist.

7. Vorrichtung nach Anspruch 6, **dadurch gekennzeichnet,** daß die Zeitverzögerungsmittel auf mindestens 5 % der Gesamtzeit einstellbar sind, die für die Kurzschlußphase und die Lichtbogenphase erforderlich ist.

8. Vorrichtung nach einem der Ansprüche 5 bis 7, **dadurch gekennzeichnet,** daß die Zeitverzögerungsmittel auf weniger als 30 % der Lichtbogenphase einstellbar sind.

9. Vorrichtung nach einem der Ansprüche 5 bis 8, **dadurch gekennzeichnet,** daß der zweite Stromsteuerkreis (24) Mittel zum Umformen des starken Stromimpulses in einen Impuls aufweist, der eine hohe, zeitkonstante Vorderflanke und eine allmählich abfallende Hinterflanke aufweist.

10. Vorrichtung nach einem der Ansprüche 5 bis 9, **dadurch gekennzeichnet,** daß der zweite Stromsteuerkreis (24) einen Stromausgang mit niedriger Induktanz aufweist.

11. Vorrichtung nach einem der Ansprüche 5 bis 10, **dadurch gekennzeichnet,** daß der erste Stromsteuerkreis (22) eine hohe Induktanz aufweist.

12. Vorrichtung nach einem der Ansprüche 5 bis 11, **dadurch gekennzeichnet,** daß der zweite Stromsteuerkreis (24) Mittel zum Hinzufügen eines Stromes zum Grundstrom während der Lichtbogenphase und Mittel zum Reduzieren der vorher ausgewählten Fläche im umgekehrten Verhältnis zur Amplitude des hinzugefügten Stromes aufweist.

13. Vorrichtung nach einem der Ansprüche 5 bis 11, **dadurch gekennzeichnet,** daß ein dritter Stromsteuerkreis (26) zum Steuern des Stromflusses während der Kurzschlußphase vorgesehen ist, der ein Zeitglied aufweist, das nur den Stromfluß des Grundstromes ermöglicht, bis das geschmolzene Metall des Schweißdrahtes durch Oberflächenspannung in das Schmelzbad überzugehen beginnt und der Mittel aufweist, mit denen anschließend ein starker Pinchstromimpuls dem kurzschlußgeschmolzenen Metall zugeführt wird und daß eine Detektoreinrichtung vorgesehen ist, welche das unmittelbar bevorstehende Abreißen des geschmolzenen Metalles vom Draht feststellt und den Pinchimpuls unterbricht, um die Lichtbogenphase zu starten.

14. Vorrichtung nach Anspruch 13, **dadurch gekennzeichnet,** daß der dritte Stromsteuerkreis (26) einen Stromausgang mit niedriger Induktivität aufweist.

15. Vorrichtung nach Anspruch 13 oder 14, **dadurch gekennzeichnet,** daß die Detektoreinrichtung Mittel zum Feststellen Spannungsänderung über die Zeit (dv/dt) über das durch Kurzschluß geschmolzene Metall und Mittel zum Beenden des Pinch-Impulses aufweist, wenn die Spannungsänderungen über die Zeit (dv/dt) nur das Ende der Kurzschlußphase markieren.

16. Vorrichtung nach einem der Ansprüche 13 bis 15, **dadurch gekennzeichnet,** daß die Detektoreinrichtung Mittel zum Feststellen des dv/dt über das durch Kurzschluß geschmolzene Metall und Mittel zum Unterbrechen des Pinch-Impulses aufweist, wenn die Spannungsänderung über die Zeit (dv/dt) über einen ausgewählten Betrag nur am Ende einer Kurzschlußphase ansteigt.

17. Vorrichtung nach einem der Ansprüche 5 bis 16, **dadurch gekennzeichnet,** daß der erste Stromsteuerkreis (22) kontinuierlich einen den Lichtbogen stützenden Grundstrom in der Größenordnung von etwa 20 bis 80 A während der Kurzschlußphase und der Lichtbogenphase kontinuierlich über den Schweißdraht (50) auf das Werkstück (60) leitet, daß der zweite Stromsteuerkreis (24) von geringer Induktivität zum Steuern des Stromflusses oberhalb des Grundstrompegels während der Lichtbogenphase dient und daß der dritte Stromsteuerkreis (26) von geringer Induktivität den Strom oberhalb des Grundstrompegels während der Kurzschlußphase steuert.

## Claims

1. A method of short circuiting arc welding in which welding current from a D.C. power supply (20) is supplied to a welding wire (50) being continuously advanced at a controlled rate towards a workpiece (60), which welding current is directed into the weld pool forming on the workpiece, wherein short circuit phases (SC) occur in succession separated by arcing phases (PC), and a background current (I_{B}) of high inductance and low current strength is passed through the wire and the pool during the short circuit phases (SC) and during the arcing phases (PC), which background current is just above the level which is necessary to sustain an arc when the wire and the pool are separated from each other, and wherein at the start of the arcing phase (PC) a low background current (I_{B}) is first passed through the arc into the weld pool, followed by a high current pulse (BP) with a previously selected time function region (I(t)) for the high current pulse, which current pulse (BP) in every arcing phase (PC) melts an approximately constant volume of metal (202) on the end of the wire at a distance from the weld pool, and wherein the low background current (I_{B}) is maintained after the termination (e) of the high current pulse for the remainder of the arcing phase (PC) and the welding wire (50) with the volume of melted metal (202) on its end is fed into the weld pool to initiate the short circuit phase (SC) and to produce a new arc which is only sustained by the low background current (I_{B}), characterised in that the low background current (I_{B}) is passed at the start of the arcing phase (PC) for a preselected time (T₂) which is sufficient to quell the weld pool, and that the high current pulse (BP) is terminated before 60 % of the arcing phase has transpired.

2. A method according to claim 1, characterised in that the background current (I_{B}) which is passed during the preselected time (T₂) is introduced at the end of the short circuit phase (SC) as a break period in which the melted metal on the wire and the weld pool reach equilibrium.

3. A method according to claim 1 or 2, characterised in that the background current (I_{B}) is maintained for the entire duration of welding.

4. A method according to any one of claims 1 to 3, characterised in that the high current pulse (BP) is caused to flow for a duration which is less than 30 % of the arcing phase.

5. An apparatus for short circuiting arc welding according to claim 1 with a single constant voltage D.C. power supply which causes a welding current to pass through a welding wire into a weld pool of molten metal forming on a workpiece (60), with wire feeding means (40) which advances the welding wire (50) towards the workpiece (60) controlled in such a way that the welding wire alternately arrives at an arcing phase and a short circuit phase, wherein the wire (50) is located at a distance from the weld pool but is advanced towards the weld pool during the arcing phase, and during the short circuit phase the melted metal located on one end is transferred into the weld pool by a necking action, by means of which a new arcing phase is initiated, characterised in that a first current control circuit (22) is provided which continuously causes a low level, arc sustaining background current (I_{B}) to flow between the welding wire (50) and the workpiece (60), and that a second current control circuit (24) is provided for controlling the current flow during the arcing phase (PC), the said second current control circuit having means for passing a high current pulse (BP) with a preselected time function region (I(t)) through the arc between the wire and the weld pool.

6. An apparatus according to claim 5, characterised in that the second control circuit (24) has time delay means.

7. An apparatus according to claim 6, characterised in that the time delay means can be adjusted to at least 5 % of the total time which is necessary for the short circuit phase and the arcing phase.

8. An apparatus according to any one of claims 5 to 7, characterised in that the time delay means can be adjusted to less than 30 % of the arcing phase.

9. An apparatus according to any one of claims 5 to 8, characterised in that the second current control circuit (24) has means for transforming the high current pulse into a pulse which has a high time constant leading edge and a gradually decaying trailing edge.

10. An apparatus according to any one of claims 5 to 9, characterised in that the second current control circuit (24) has a low inductance current output.

11. An apparatus according to any one of claims 5 to 10, characterised in that the first current control circuit (22) has a high inductance.

12. An apparatus according to any one of claims 5 to 11, characterised in that the second current control circuit (24) has means for adding current to the background current during the arcing phase and means for reducing the preselected area in inverse proportion to the amplitude of the added current.

13. An apparatus according to any one of claims 5 to 11, characterised in that a third current control circuit (26) is provided for controlling the current flow during the short circuit phase, the said third current control circuit having a timing means which only allows the background current to flow until the melted metal of the welding wire begins to transfer into the weld pool by surface tension, and which has means with which thereafter a high current pinch pulse is supplied to the short-circuited melted metal, and that a detector device is provided which determines the immediately impending breaking of the melted metal from the wire and discontinues the pinch pulse in order to start the arcing phase.

14. An apparatus according to claim 13, characterised in that the third current control circuit (26) has a low inductance current output.

15. An apparatus according to claim 13 or 14, characterised in that the detector device has means for determining a change in voltage (dv/dt) with respect to time across the metal melted by short circuiting and means for discontinuing the pinch pulse when the changes in voltage only mark the end of the short circuit phase.

16. An apparatus according to any one of claims 13 to 15, characterised in that the detector device has means for determining the dv/dt across the metal melted by short circuiting and means for discontinuing the pinch pulse when the change in voltage with respect to time (dv/dt) only increases by a selected amount at the end of a short circuit phase.

17. An apparatus according to any one of claims 5 to 16, characterised in that the first current control circuit (22) continuously directs an arc sustaining flow of current of the order of about 20 to 80 A between the welding wire (50) and the workpiece (60) during the short circuit phase and the arcing phase, that the second low inductance current control circuit (24) serves to control the current flow above the background current level during the arcing phase, and that the third low inductance current control circuit (26) controls the current above the background current level during the short circuit phase.

## Revendications

1. Procédé de soudage à l'arc de court-circuit, dans lequel une baguette de soudage (50) avancée en continu contre une pièce (60), selon une vitesse commandée, est alimentée, par une source de courant continu (20), en courant de soudage, qui est conduit dans le bain de soudure se formant sur la pièce, des phases de court-circuit (SC) interrompues par des phases d'arc électrique (PC) se succédant, et un courant de base (I_{B}) d'une inductance élevée et d'une faible puissance étant conduit par la baguette de soudage et par le bain, durant les phases de court-circuit (SC) et les phases d'arc électrique (PC), ledit courant étant tout juste supérieur au niveau requis pour maintenir un arc électrique, lorsque l'on sépare la baguette et le bain l'un de l'autre, et un faible courant de base (I_{B}), au début de la phase d'arc électrique, puis une forte impulsion de courant (BP) avec un secteur, une plage de fonction de temps (I(A)) du courant d'impulsion (BP), présélectionné, étant conduits par l'arc électrique dans le bain de soudure, laquelle impulsion de courant (BP) enlève par fusion un volume de métal (202) demeurant sensiblement égal à chaque phase d'arc électrique, à l'extrémité de la baguette à distance du bain de soudage, et le faible courant de base (I_{B}) étant maintenu, une fois que la forte impulsion de courant est terminée (e), pour le reste de la phase d'arc électrique (PC), et la baguette de soudage (50) avec le volume de métal fondu (202) se trouvant à son extrémité, étant guidée dans le bain de soudure, afin d'amorcer la phase de court-circuit (SC) et de générer un nouvel arc électrique, qui n'est maintenu que par le faible courant de base (I_{B}), caractérisé en ce que le faible courant de base (I_{B}) est amené, au début de la phase d'arc électrique, (PC) pendant un temps (T₂) prédéterminé, suffisant pour exercer une pression sur le bain de soudure et en ce que la forte impulsion de courant (BP) est achevée, avant que 60% de la phase d'arc électrique ne soit écoulée.

2. Procédé selon la revendication 1, caractérisé en ce que le courant de base (I_{B}), qui est amené pendant le temps (T₂) prédéterminé, est appliqué à la fin de la phase de court-circuit (SC), en tant que temps de repos, pendant lequel le métal fondu sur la baguette et le bain de soudure atteignent un équilibre.

3. Procédé selon l'une quelconque des revendications 1 ou 2, caractérisé en ce que le courant de base (I_{B}) est maintenu pendant la totalité de la durée du soudage.

4. Procédé selon l'une quelconque des revendications 1 à 3, caractérisé en ce que l'on fait circuler la forte impulsion de courant (BP) pendant une durée inférieure à 30% de la phase d'arc électrique.

5. Dispositif de soudage à l'arc de court-circuit, selon la revendication 1, avec une seule source de courant de tension constante, qui fait circuler un courant de soudage par une baguette de soudage dans un bain de soudure en métal fondu se formant sur une pièce (60), avec un dispositif (40) d'avance de la baguette faisant avancer la baguette de soudage (50) contre la pièce de telle sorte que, en la commandant, la baguette de soudage entre alternativement dans une phase d'arc électrique et dans une phase de court-circuit, la baguette (50) se trouvant à distance du bain de soudure pendant la phase d'arc électrique, mais étant avancée contre le bain de soudure et faisant passer, pendant la phase de court-circuit, le métal fondu se trouvant à son extrémité dans le bain de soudure par effet de pincement, la phase d'arc électrique étant ainsi amorcée, caractérisé en ce qu'un premier circuit de commande électrique (22) est prévu, qui fait circuler en continu, par la baguette de soudage (50) vers la pièce (60) un faible courant de base (I_{B}) supportant l'arc électrique et en ce qu'un deuxième circuit de commande électrique (24) est prévu pour commander le flux de courant pendant la phase d'arc électrique (PC) qui présente des moyens, qui envoient une forte impulsion de courant (BP) avec une plage de fonction de temps I(t) prédéterminée, par l'arc électrique entre la baguette et le bain de soudure.

6. Dispositif selon la revendication 5, caractérisé en ce que le deuxième circuit de commande (24) présente des moyens de temporisation.

7. Dispositif selon la revendication 6, caractérisé en ce que les moyens de temporisation peuvent être réglés à au moins 5% de la durée totale nécessaire pour la phase de court-circuit et la phase d'arc électrique.

8. Dispositif selon l'une quelconque des revendications 5 à 7, caractérisé en ce que les moyens de temporisation peuvent être réglés à moins de 30% de la phase d'arc électrique.

9. Dispositif selon l'une quelconque des revendications 5 à 8, caractérisé en ce que le deuxième circuit de commande électrique (24) présente des moyens pour transformer la forte impulsion de courant en une impulsion présentant un flanc de montée élevé, constant dans le temps, et un flanc de descente, descendant progressivement.

10. Dispositif selon l'une quelconque des revendications 5 à 9, caractérisé en ce que le deuxième circuit de commande électrique (24) présente une sortie de courant d'une faible inductance.

11. Dispositif selon l'une quelconque des revendications 5 à 10, caractérisé en ce que le premier circuit de commande électrique (22) présente une inductance élevée.

12. Dispositif selon l'une quelconque des revendications 5 à 11, caractérisé en ce que le deuxième circuit de commande électrique (24) présente des moyens pour ajouter un courant au courant de base pendant la phase d'arc électrique et des moyens pour réduire la surface prédéterminée selon un rapport inverse à l'amplitude du courant ajouté.

13. Dispositif selon l'une quelconque des revendications 5 à 11, caractérisé en ce qu'un troisième circuit de commande électrique (26) est prévu pour commander le flux de courant pendant la phase de court-circuit, qui présente un relais de temporisation permettant seulement la circulation du courant de base, jusqu'à ce que le métal fondu de la baguette de soudage commence à passer dans le bain de soudure par tension superficielle et qui présente des moyens, avec lesquels, ensuite, une forte impulsion de courant de pincement est amenée au métal fondu par court-circuit et en ce qu'un dispositif à détecteur est prévu, lequel détecte l'arrachement imminent du métal fondu, de la baguette, et interrompt l'impulsion de pincement, afin d'amorcer la phase d'arc électrique.

14. Dispositif selon la revendication 13, caractérisé en ce que le troisième courant de commande électrique (26) présente une sortie de courant d'une faible inductance.

15. Dispositif selon l'une quelconque des revendications 13 ou 14, caractérisé en ce que le dispositif à détecteur présente des moyens pour constater la variation de la tension dans le temps (dv/dt) par l'intermédiaire du métal fondu par court-circuit et des moyens pour mettre fin à l'impulsion de pincement, lorsque les variations de tension dans le temps (dv/dt) marquent seulement la fin de la phase de court-circuit.

16. Dispositif selon l'une quelconque des revendications 13 à 15, caractérisé en ce que le dispositif à détecteur présente des moyens pour constater la dv/dt par l'intermédiaire du métal fondu par court-circuit et des moyens pour interrompre l'impulsion de pincement, lorsque la variation de tension dans le temps (dv/dt) augmente, d'une certaine proportion déterminée, seulement à la fin de la phase de court-circuit.

17. Dispositif selon l'une quelconque des revendications 5 à 16, caractérisé en ce que le premier circuit de commande électrique (22) conduit en continu un courant de base supportant l'arc électrique, selon un ordre de grandeur d'environ 20 à 80 A, pendant la phase de court-circuit, et la phase d'arc électrique, par la baguette de soudage (50) sur la pièce (60), en ce que le deuxième circuit de commande électrique (24) d'une faible inductance sert à commander le flux de courant au-dessus du niveau du courant de base pendant la phase d'arc électrique, et en ce que le troisième courant de commande électrique (26) d'une faible inductance commande le courant au-dessus du niveau du courant de base, pendant la phase de court-circuit.
